# EUROPEAN PATENT SPECIFICATION

(11) **EP 3 214 001 B1**
(45) Date of publication and mention of the grant of the patent: **12.06.2019**
(21) Application number: 15855477.4
(22) Date of filing: 15.10.2015
(51) Int. Cl.: B65B 11/02, B65B 57/00, B65B 57/16

(54) **NOVEL WALKING TYPE WINDING MACHINE**
NEUARTIGE GEHWICKELMASCHINE
NOUVELLE MACHINE À ENROULER DU TYPE AUTO-TRACTÉE

(30) Priority: 28.10.2014 CN 201410586221; 28.10.2014 CN 201420630267 U; 28.10.2014 CN 201410586859; 28.10.2014 CN 201420629855 U; 28.10.2014 CN 201420629777 U
(43) Date of publication of application: 06.09.2017
(73) Proprietor: Hangzhou Youngsun Intelligent Equipment Co., Ltd., Hangzhou, Zhejiang 310030 (CN)
(72) Inventor: LUO, Bangyi, Hangzhou Zhejiang 310030 (CN); ZHANG, Caiqin, Hangzhou Zhejiang 310030 (CN); WANG, Leichun, Hangzhou Zhejiang 310030 (CN); ZHANG, Ziquan, Hangzhou Zhejiang 310030 (CN); ZHOU, Xiaohui, Hangzhou Zhejiang 310030 (CN); DING, Xiaomin, Hangzhou Zhejiang 310030 (CN)
(74) Representative: Kransell & Wennborg KB
(86) International application number: PCT/CN2015/091966
(87) International publication number: WO 2016/066021

(56) References cited:
- WO-A1-2012/153248
- WO-A1-2012/153265
- WO-A2-2011/057166
- CN-A- 101 797 982
- CN-A- 103 708 049
- CN-A- 104 354 889
- CN-A- 104 354 889
- CN-A- 104 369 892
- CN-A- 104 369 892
- CN-U- 204 297 150
- CN-U- 204 297 150
- CN-U- 204 297 154
- CN-U- 204 297 219
- CN-U- 204 415 787
- CN-U- 204 415 787
- US-A- 4 095 395

## Description

### FIELD OF THE INVENTION

The present invention relates to a walking type winding machine.

### BACKGROUND

Winding machine is a mechanical device in the field of packaging machinery, which is used to wrap packaging film on the surface of articles. The walking type winding machine is used for winding of articles with great volume. The walking type winding machine is a king of automatic equipment, including a steering part and a machine body. The walking type winding machine is provided with a front protection ring, which is fixed on the machine body, when the walking machine collides with an obstacle, it can protect the important parts of the steering part. However, when this structure collides with an obstacle, the machine body is directly impacted; moreover, the machine body has a large size, which is not sensitive to change direction when walking. In addition, for the previous walking type winding machines, the length of path is used to calculate the path, and the insensitive change of direction will bring great cumulative error.

Further attention is drawn to CN 1017979 82, disclosing a walking winding machine, which is provided with a walking mechanism, a base plate, an upright post and a film frame, wherein the film frame is arranged on the upright post, a lifting device is arranged on the base plate, the upright post is connected on the lifting device, the walking mechanism is provided with walking wheels which comprise a left wheel and a right wheel, the walking mechanism is also provided with a sensor, the sensor controls the work of a driving motor of the walking wheels positioned at the side of a rolling element, the rolling element is connected on a swinging mechanism, and the sensor induces the action of the swinging mechanism.

### SUMMARY

The first object of the present invention is to provide a novel walking type winding machine, which makes the control of a film winding path of a waling type winding machine become simple and accurate, and is not only able to protect important components of the steering part but also to improve walking steering sensitivity of a walking type winding machine, as well as to mitigate the impact on the machine body when colliding with an obstacle. To achieve this object, the present invention employs the following technical solutions:
A novel walking type winding machine, including a steering part and a machine body, the steering part is located at the front of the machine body, the walking type winding machine is provided with a front protection ring, and the machine body is provided with a drive wheel, wherein the front protection ring is fixed on a frame of a steering part; the walking type winding machine is provided with a steering counting device, and the steering counting device is provided with a first sensor for sensing the steering of a machine body, and the first sensor is connected to a controller of the walking type winding machine such that the controller can determine the steering times; and a second sensor is provided in the steering part, the second sensor or a component fixedly connected thereto is supported by an elastic component such that the second sensor is movably installed on steering part, and the second sensor is used for sensing the backward movement of the frame of the steering part or the component fixedly connected to the frame with respect to the second sensor.

On the basis of above technical solution, the present invention further employs the following technical solutions or a combination of the technical solutions thereof.

The steering counting device includes a mounting shaft in the steering part rotating synchronously with the steering part frame, a rotary part is mounted on the mounting shaft, and the rotary part has a sensed component connected to the mounting shaft by means of a friction fit, the steering counting device further includes a rotating limit structure of the rotating part, the rotary part is rotated synchronously with the mounting shaft under the friction provided by the friction fit, when rotated to collide with the limit structure, the rotary part is stopped by the limit structure, the mounting shaft can continue to rotate; the first sensor is fit with the sensed component.

The steering counting device includes a first part, a second part and a third part; the first part is a fixed part, mounted on the machine body, the first part includes a mounting rack, and the first sensor and the limit structure belong to the first part, the first sensor and the limit structure are mounted on the mounting rack; the mounting shaft is divided into an upper part and a lower part; the lower part of the mounting shaft belong to the second part, vertically fixed on the steering part frame; the upper part of the mounting shaft belongs to the third part, and third part is mounted on the second part through the fixed connection between the upper part of the mounting shaft and the lower part of the mounting shaft, the rotary part belongs to the third part, connected to the upper part of the mounting shaft by means of the friction fit.

The extension line of a mounting shaft in the steering part is vertically intersected with an axle of the steering part, the lower front side of the chassis of the machine body is in a step shape, and the front part of the machine body is overlaid at the rear part of the steering part through the step.

The first sensor and the limit structure have a position fit: when the rotary part collides with a limit structure in front of its rotation path, the sensed component can be sensed by the sensor.

The second sensor is located at the rear of the steering part.

The rear of the steering part has two symmetrical sensor mounting rack mounting areas with respective to the midline of the steering part, and the sensor mounting racks are mounted in the sensor mounting rack mounting areas, and the second sensor is mounted symmetrically on the two mounting racks with respective to the midline of the steering part.

The rear of the steering part has two symmetrical triangle areas or trapezoidal areas with respective to the midline of the steering part, the front of the sensor mounting rack is in fitted triangular or trapezoidal shape, and the sensor mounting racks are mounted in the triangle area or trapezoidal area, and the second sensor is mounted symmetrically on the two mounting racks with respective to the midline of the steering part.

The steering part is provided with a limit structure, and the limit structure is used to prevent the mounting rack from falling down and prevent excessive posterior displacement of the mounting rack.

The limit structure includes a limit hook, and the limit hook is hooked at the outer end of the mounting rack.

The manual brake operating mechanism includes a brake lever, and the brake lever is connected to a brake member of the brake mechanism via a connecting mechanism, to manually operate the brake member for braking and releasing brake.

The manual brake operating mechanism is further provided with a third sensor, and the third sensor is connected to a controller of a DC brake motor for transmitting the brake lever position information sensed to the controller. A framework is fixed on the chassis in the front of the upright column, the upright column is until the bottom of the space at the back of the framework, and the machine body is further provided with a hinged connection structure at the height corresponding to the framework such that the upright column can be hinged at this height.

The drive motor on the upright column that drives the lifting is mounted on the top of the upright column and in front of the lifting guide rail. Further the drive motor includes a motor body and a reduction gear, and the reduction gear is located above the motor body.

The machine body chassis is provided with an insertion hole of a forklift arm, two insertion holes are provided at the front and back of the chassis. The insertion hole at the front side is close to the front end of the chassis, and the insertion hole at the back side is located at the part of the chassis in front of the upright column. Further, the lower front side of the chassis of the machine body is in a step shape, and the front part of the machine body is overlaid at the rear part of the steering part through the step; the insertion hole at the rear side is at the same height as the insertion hole at the front side.

According to an embodiment which is not in the scope of the invention, a walking type winding machine includes a steering part and a machine body, the steering part is located at the front of the machine body, wherein the walking type winding machine is provided with a steering counting device, and the steering counting device is provided with a first sensor for sensing the steering of a machine body, and the first sensor is connected to a controller of the walking type winding machine such that the controller can determine the steering times.

The steering counting device includes a mounting shaft in the steering part rotating synchronously with the steering part frame, a rotary part is mounted on the mounting shaft, and the rotary part has a sensed component connected to the mounting shaft by means of a friction fit, the steering counting device further includes a rotating limit structure of the rotating part, the rotary part is rotated synchronously with the mounting shaft under the friction provided by the friction fit, when rotated to collide with the limit structure, the rotary part is stopped by the limit structure, the mounting shaft can continue to rotate; the first sensor is fit with the sensed component.

The steering counting device includes a first part, a second part and a third part; the first part is a fixed part, mounted on the machine body, the first part includes a mounting rack, and the first sensor and the limit structure belong to the first part, the first sensor and the limit structure are mounted on the mounting rack; the mounting shaft is divided into an upper part and a lower part; the lower part of the mounting shaft belong to the second part, vertically fixed on the steering part frame; the upper part of the mounting shaft belongs to the third part, and third part is mounted on the second part through the fixed connection between the upper part of the mounting shaft and the lower part of the mounting shaft, the rotary part belongs to the third part, connected to the upper part of the mounting shaft by means of the friction fit. The extension line of a mounting shaft in the steering part is vertically intersected with an axle of the steering part, the lower front side of the chassis of the machine body is in a step shape, and the front part of the machine body is overlaid at the rear part of the steering part through the step. The first sensor and the limit structure have a position fit: when the rotary part collides with a limit structure in front of its rotation path, the sensed component can be sensed by the first sensor.

According to an embodiment which is not in the scope of the invention, a steering headstock of a walking type winding machine includes a steering part and a machine body, the steering part is located at the front of the machine body, the walking type winding machine is provided with a front protection ring, being fixed on a frame of the steering part.

On the basis of above technical solution, the embodiment further employs the following technical solutions or a combination of the technical solutions thereof.

A second sensor is provided in the steering part, the second sensor or a component fixedly connected thereto is supported by an elastic component such that the second sensor is movably installed on steering part, and the second sensor is used for sensing the backward movement of the frame of the steering part or the component fixedly connected to the frame with respect to the second sensor.

The second sensor is located at the rear of a steering part.

The rear of the steering part has two symmetrical sensor mounting rack mounting areas with respective to the midline of the steering part, and the sensor mounting racks are mounted in the sensor mounting rack mounting areas, and the second sensor is mounted symmetrically on the two mounting racks with respective to the midline of the steering part.

The rear of the steering part has two symmetrical triangle areas or trapezoidal areas with respective to the midline of the steering part, the front of the sensor mounting rack is in fitted triangular or trapezoidal shape, and the sensor mounting racks are mounted in the triangle area or trapezoidal area, and the second sensor is mounted symmetrically on the two mounting racks with respective to the midline of the steering part.

The steering part is provided with a limit structure, and the limit structure is used to prevent the mounting rack from falling down and prevent excessive posterior displacement of the mounting rack.

The limit structure includes a limit hook, and the limit hook is hooked at the outer end of the mounting rack.

In the present invention, the steering counting device is combined to the steering part such that the walking type winding machine can accurately calculate the steering times. The travel distance is designed according to the number of corners of the wrapped articles, to ensure that the winding of package film is in place and easy to control; moreover, the front protection ring is fixed to the steering part, which can maintain the important functions of the front protection ring for important components of the steering part, reduce the length of the machine body, and enhance the walking steering sensitivity of a walking type winding machine, so that it is more accurate to determine the film winding path relying on the steering times; besides, the front protection ring is a part of steering part, which can turn and change to buffer when collided with an obstacle, the machine body will not be impacted, to mitigate the impact and shock on the whole machine. The sensor in the invention can sense the collision of the winding machine, to provide signals for timely braking of the winding machine and achieve automatic braking in case of collision. In addition, the present invention can achieve the following technical effects:
1. The steering counting device has a high sensitivity and it is easy to install.
2. It can achieve braking and release of braking of the walking type winding machine in power-on or power-off condition through the DC brake motor and manual brake; it is easy to operate and enhance the operating safety of the walking type winding machine.
3. The structure of the invention can facilitate the rotation and reversion of upright column during transportation, its structure is evenly arranged and the center of gravity is stable and reasonable, which can guarantee the walking performance and reduce the volume during transportation.
4. Through reasonable structural layout, it can enhance the design freedom of the operation panel to make it easy to operate, making reasonable and full use of the space of the control panel.
5. The invention does not affect the operating performance of various devices of the upright column; and the upright column shell can protect the drive motor and prevent the accidents occurring in the movement and transport process, to lower the center of gravity of the upright column to a certain extent and enhance the movement and transport safety.
6. The handling structure of the invention can adapt to the characteristics of walking type winding machine: great load on chassis, lifting film frame is arranged at the rear of the upright column, high asymmetry at the front and back, making the walking type winding machine easy to handle safely; in addition, the handling structure will not affect the film winding work, to lower the lifting film frame as much as possible and enhance the film winding effect.

### BRIEF DESCRIPTION OF THE DRAWINGS

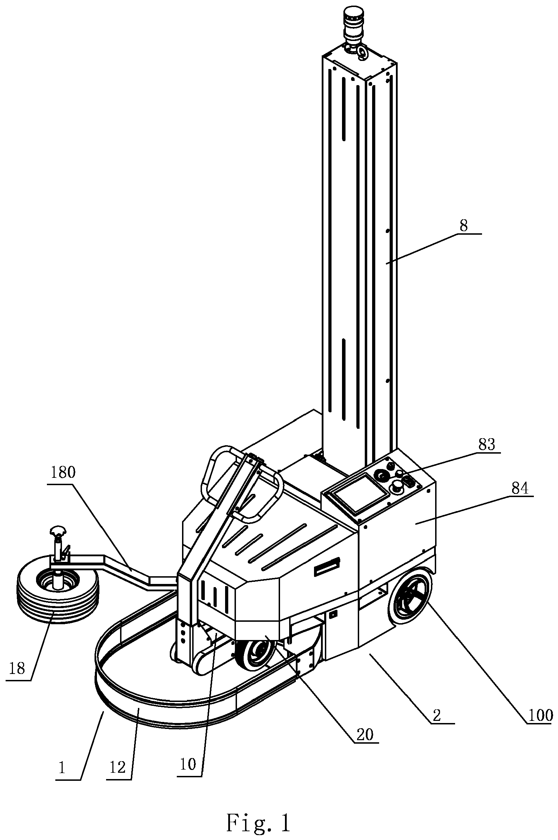

FIG. 1 is a schematic view of a walking type winding machine according to an embodiment in the invention.

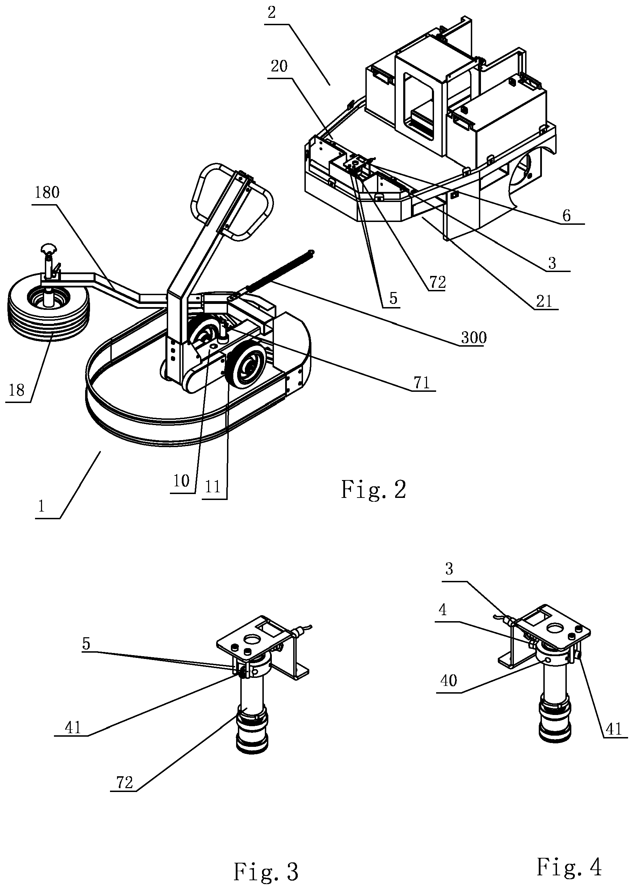

FIG. 2 is a matching schematic of a steering part and a machine body chassis according to an embodiment in FIG. 1.
FIG. 3 is a schematic view of a third part of a counting device according to an embodiment in FIG. 1.
FIG. 4 is a schematic view of a third part of a counting device observed from another direction according to an embodiment in FIG. 1.

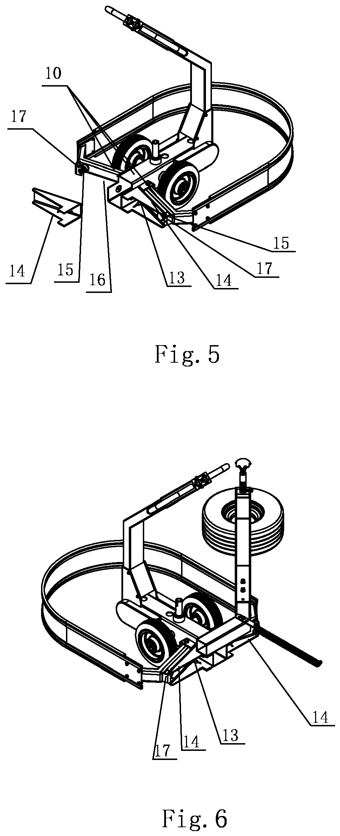

FIG. 5 is a schematic view of a steering part according to an embodiment in FIG. 1.
FIG. 6 is an exploded view of a steering part according to an embodiment in FIG. 1.

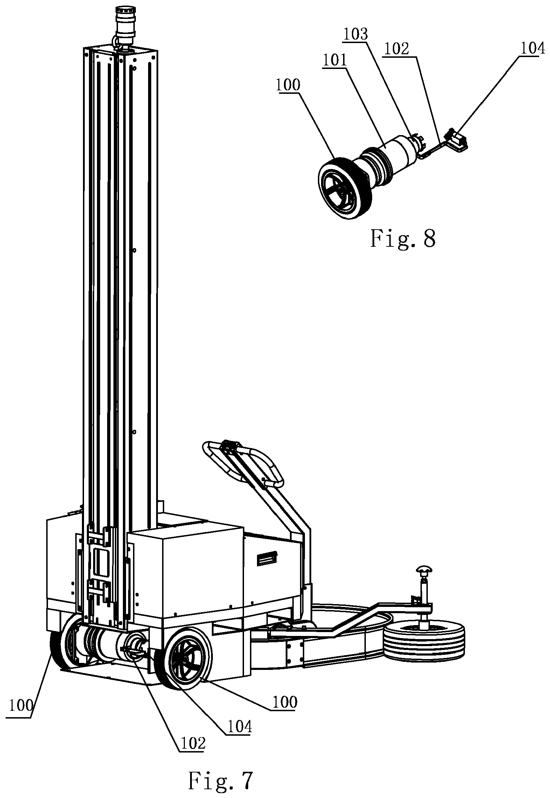

FIG. 7 is a schematic view of a walking type winding machine from another direction according to an embodiment in the invention.
FIG. 8 is a schematic view of a drive wheel driven by a DC brake motor.

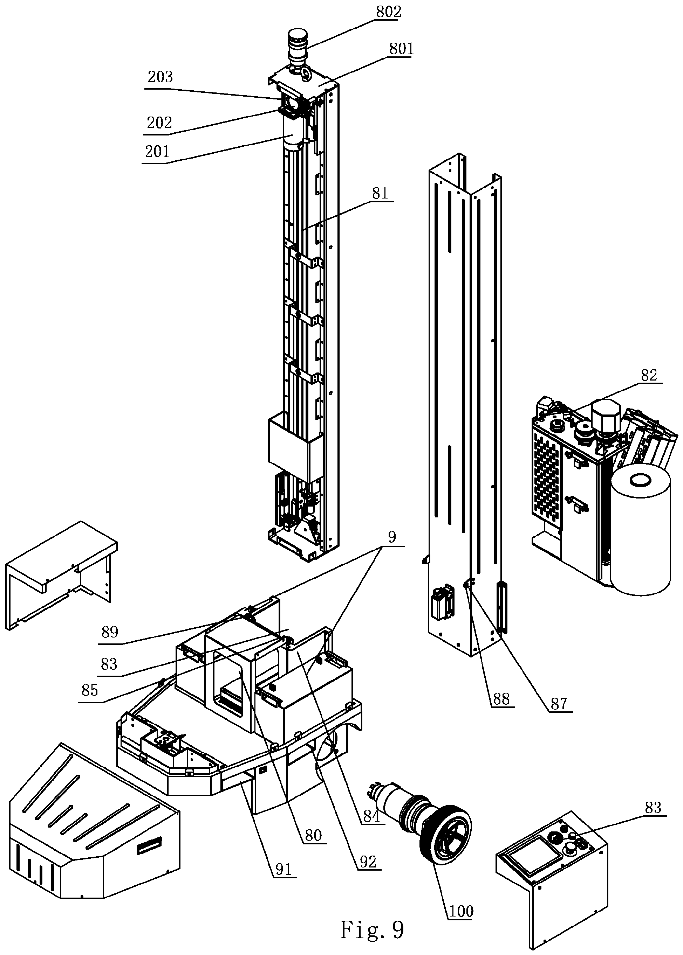

FIG. 9 is an exploded view of a machine body in FIG. 1.
FIG. 10 is a perspective view of another rotary installation embodiment of an upright column of a walking type winding machine in the invention.
FIG. 11 is an exploded view of the embodiment shown in FIG. 10.
FIG. 12 is a perspective view of the embodiment shown in FIG. 19 from the rear side (the lifting film rack concealed).

### DETAILED DESCRIPTION

Referring to figures, this invention provides a walking type winding machine, including a steering part and a machine body 2, the steering part is located at the front of the machine body; the functional devices of winding of the walking type winding machine are located in the machine body and mounted on the chassis 20 of the machine body. The machine body is provided with a drive wheel 100. The walking type winding machine is provided with a steering counting device, and the steering counting device is provided with a first sensor 3 for sensing the steering of a machine body, and the first sensor 3 is connected to a controller of the walking type winding machine such that the controller can determine the steering times, to determine the film winding path.

The steering counting device includes a mounting shaft in the steering part 1 rotating synchronously with the steering part frame 10, a rotary part 40 is mounted on the mounting shaft, and the rotary part 40 has a sensed component 4 connected to the mounting shaft by means of a friction fit, the steering counting device further includes a rotating limit structure 5 of the rotating part 40, such as two limit pins, stoppers, etc., the rotary part 40 may have parts or protrusions 41 which are limited by them.

The rotary part 40 is rotated synchronously with the mounting shaft under the friction provided by the friction fit, when collided with the limit structure in the rotation path, the rotary part is stopped by the limit structure to stop rotation, the mounting shaft can continue to rotate; the first sensor 3 is fit with the sensed component 4, when the steering angle of the steering part (also the rotational angle of the sensed component4) reaches the steering standard, the sensed component 4 can be sensed once by the first sensor 3. The first sensor 3 transmits the induced signal to the controller and accumulates it once; by this way, it can make the sensing part of the valve to become very sensitive, to facilitate precise film winding. The first sensor 3 and the limit structure 5 have the following position fit: when the sensed component rotates and collides with a limit structure in front of its rotation path (that is, the rotation angle reaches the rotation standard), it can be sensed by the sensor 3.

Further, this embodiment further provides a structurally reasonable and easy-to-install modular structure of steering counting device. The steering counting device includes a first part, a second part and a third part; the first part is a fixed part, mounted on the machine body, the first part includes a mounting rack 6, and the first sensor 3 and the limit structure 5 belong to the first part, the first sensor 3 and the limit structure 5 are mounted on the mounting rack 6; the mounting shaft is divided into an upper part and a lower part; the lower part 71 of the mounting shaft belong to the second part, fixed on the steering part frame 10; the upper part 72 of the mounting shaft belongs to the third part, and third part is mounted on the second part through the fixed connection between the upper part 72 of the mounting shaft and the lower part 71 of the mounting shaft, the rotary part 40 belongs to the third part, connected to the upper part 72 of the mounting shaft by means of the friction fit, for example, the rotary part 40 is provided with a friction sleeve which is sheathed on the upper part 72 of the mounting shaft with friction fit, or the rotary part 40 is provided with a bearing which is sheathed on the upper part 72 of the mounting shaft.

In order to make the steering counting device mounted in appropriate position of the steering part, for example, to make the extension line of a mounting shaft vertically intersected with an axle 11 of the steering part, the lower front side of the chassis of the machine body is in a step shape 21, and the front part of the machine body is overlaid at the rear part of the steering part through the step.

The walking type winding machine is provided with a front protection ring 12, which is fixed on a frame 10 of a steering part 1.

A second sensor 13 is provided in the steering part 1, the sensor mounting rack14 is supported by an elastic component such that the second sensor is movably installed on steering part, the mounting rack 14 can be sheathed to pins, bolts fixed to frame 10 as a guide. The second sensor 13 is used for sensing the backward movement of the frame 10 of the steering part 1 or the component fixedly connected to the frame with respect to the second sensor 13. The elastic component can be a spring 15. The second sensor 13 is located at the rear of a steering part.

In order to further improve the sensitivity of sensing, the rear of the steering part 1 has two symmetrical sensor mounting rack mounting areas 16 with respective to the midline of the steering part, and the sensor mounting racks 14 are mounted in the mounting rack mounting areas 16, and the second sensor 13 is mounted symmetrically on the two mounting racks 14 with respective to the midline of the steering part.

The mounting rack mounting area 16 may be a triangle area, the front part of the mounting rack 14 is also in a matching triangular shape, so as to have an orientation and make the state of the mounting rack more stable.

The steering part is provided with a limit structure, and the limit structure is used to prevent the mounting rack 14 from falling down and prevent excessive posterior displacement of the mounting rack. The limit structure includes a limit hook 17, and the limit hook is hooked at the outer end of the mounting rack 14.

The drive wheel 100 is driven by a DC brake motor 101, and the brake mechanism of the DC brake motor is connected with a manual brake operating mechanism.

The manual brake operating mechanism includes a brake lever 102, and the brake lever 102 is connected to a brake member 103 of the brake mechanism via a connecting mechanism, to manually operate the brake member for braking and releasing brake. The manual brake operating mechanism is further provided with a third sensor 104, and the third sensor 104 is connected to a controller of a DC brake motor for transmitting the brake lever position information sensed to the controller, to prevent mistaken operation and prevent the walking type winding machine from starting a motor in the braking state.

The machine body 2 of the walking type winding machine further has an upright column 8 and a battery 9 used as a motor power source for the walking type winding machine. The battery 9 is arranged on both sides of the upright column 8, and a framework 80 is fixed on the chassis 20 in the front of the upright column 8, and electrical wiring and a battery charger and other equipment can be arranged in the framework 80. The space 83 until the bottom of the upright column 8 between the battery 9 on both sides and the front framework 80 can be connected with bolts or nuts at its bottom and chassis, and the machine body 2 is further provided with a hinged connection structure at the height corresponding to the framework 80 such that the upright column 8 can be hinged at this height.

The hinged connection structure can be arranged on the upright column 8 and the top of the framework 80. A bracket 84 connected to the chassis 20 or the framework 80 may be provided in the space 83. The hinged structure can be arranged on the upright column 8 and the top of the bracket 84.

The hinged connection structure is a bolt hole 87 and a bolt 85 which can pass through the bolt hole. The bolt hole can be provided on a connecting member 89 of the framework or the bracket and an engaging lug 88 of the upright column. During transportation, the upright column is rotated to fall on the framework using the bolt 85 as an axle, to reduce the transport volume.

The upright column is provided with a lifting body lifting guide rail 81, and the drive motor that drives the lifting of the lifting body 82 is mounted on the top of the upright column and is in front of the lifting guide rail 81, which can be protected by the upright column shell 800. The lifting body 82 includes a film rack.

The drive motor includes a motor body 201 and a reduction gear 202 which is above the motor body. The figure number 203 indicates a mounting rack of the drive motor, which is connected to the inside of the upright column shell 801 at the top.

On the basis of the above structure, the installation function on the outside of the upright column shell 801 at the top is optimized for idling, and an alarm lamp 802 that is simple and easy to disassemble can be provided, to further improve the walking safety of the walking type winding machine.

The walking type winding machine is further provided a sensing wheel 18, which is connected with the frame 10 of the steering part through its bracket 180. The steering part is connected to the machine body by a spring 300, and the spring 300 is connected between the frame 10 of the steering part (the bracket 180 is fixedly connected to the frame 10 and can be deemed a part of the frame) and the chassis of machine body.

In the left and right directions, the control panel 83 and the sensing wheel 18 of the walking type winding machine are located on different sides with respect to the upright column 8, the battery is located at both sides of the upright column respectively, the control panel 83 of the walking type winding machine is arranged at the top of the battery 9 on the walking type winding machine opposite to the sensing wheel 18.

Two insertion holes 91, 92 are provided at the front and back of the chassis. The insertion holes 91, 92 are opened at the side of the chassis 20. The insertion hole 91 at the front side is close to the front end of the chassis, and the insertion hole 92 at the back side is located at the part of the chassis 20 in front of the upright column 8.

The insertion hole 91 at the front side is located at the part of the chassis overlaid at the rear part of the steering part, and the insertion hole 92 at the rear side is at the same height as the insertion hole 91 at the front side. By this way, it can enhance the balance when handling and improve the handling safety.

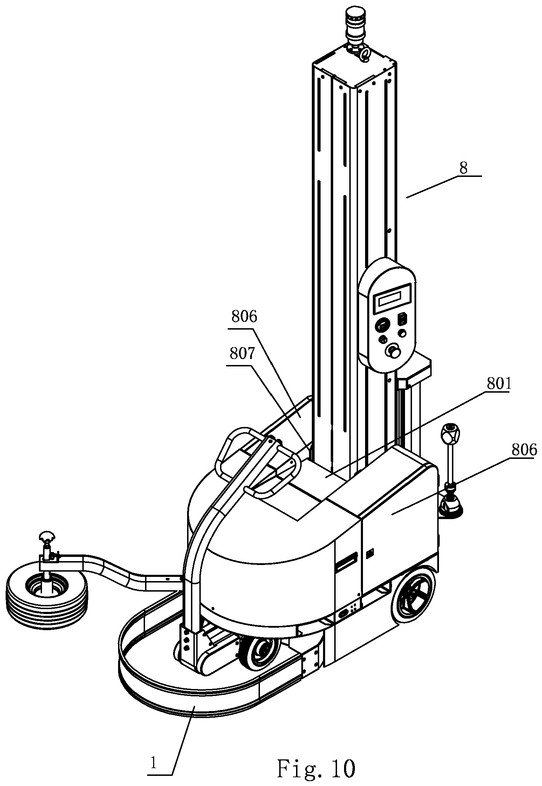

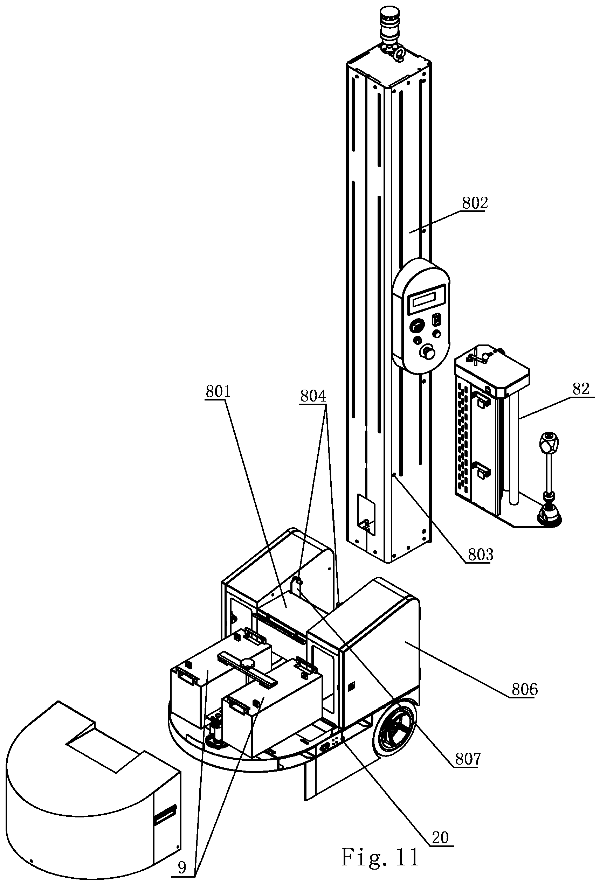

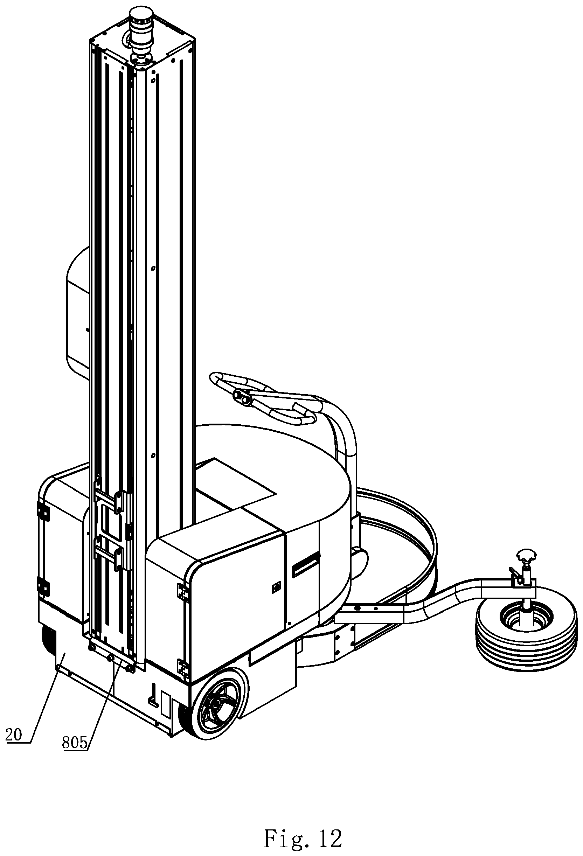

Referring to Figures 10, 11, 12, a support frame 801 is fixed on the chassis in front of the upright column 8, the upright column is at the rear of the chassis 20; a connecting hole 803 is provided on lateral plates 802 at the both sides of upright column 8 in the height corresponding to the support frame, the upright column 8 is rotatably connected to the shaft 804 on both sides through the connecting hole 803 so that the upright column 8 can be retracted by the rotation on the support frame 801 during transport, and the upright column connection structure further includes an upright column vertical locking structure so that the upright column can lock its connection when rotated to a vertical position.

The upright column vertical locking structure includes a falling connecting plate 805 which is arranged at the bottom of the rear side of the upright column, and the falling connecting plate 805 is detachably connected with the chassis 20 through bolts.

A support rod 807 is provided at both sides of the upright column, the shaft 804 is mounted on the support rod 807, and the support rod 807 is fixed to the chassis 20.

A frame body 806 is provided on both sides of the upright column, and the frame body 806 is fixed to the chassis 20. The electrical wiring and a battery charger or other equipments are provided in the frame body, to facilitate maintenance and repair. The support rod 807 is located between the frame body 806 and the upright column 8.

A shaft sleeve of the shaft 804 can be provided in the upright column corresponding to the connection hole using the aforesaid way, so that the upright column is rotated more flexibly and stably.

In the utility model, the shaft 804 can be rotatably mounted, to facilitate the operations of rotation, reversion and erection of the upright column 8. A bearing can be provided on the shaft 804, then mounted to a fixedly mounted bearing seat which can be fixed to the frame body 806 or the support rod 807.

When transporting, the upright column 8 is rotated to fall on the support frame 801 using the pin 804 as a shaft, to reduce the transport volume.

The structure in this embodiment makes the operations of rotation, reversion and erection installation easy and conveniently. Besides, the connecting structure is simple, can save the installation space of the upright column, and after vertical installation, the upright column is securely fixed in stable state, and the wiring of the e electrical equipment is reasonable to facilitate maintenance.

The foregoing description is merely a specific embodiment of the invention, which does not limit the structural features of the invention.

## Claims

1. A novel walking type winding machine, comprising a steering part (1) and a machine body (2), the steering part is located at the front of the machine body, the walking type winding machine is provided with a front protection ring (12), and the machine body is provided with a drive wheel (100), wherein the front protection ring is fixed on a frame of a steering part; the walking type winding machine is provided with a steering counting device, and the steering counting device is provided with a first sensor (3) for sensing the steering of a machine body, and the first sensor is connected to a controller of the walking type winding machine such that the controller can determine the steering times; **characterized in that** the winding machine further comprises a second sensor (13) provided in the steering part, the second sensor or a component fixedly connected thereto is supported by an elastic component such that the second sensor is movably installed on steering part, and the second sensor is used for sensing the backward movement of the frame of the steering part or the component fixedly connected to the frame with respect to the second sensor.

2. The novel walking type winding machine according to claim 1, wherein the steering counting device comprises a mounting shaft in the steering part rotating synchronously with the steering part frame, a rotary part (40) is mounted on the mounting shaft, and the rotary part has a sensed component (4) connected to the mounting shaft by means of a friction fit, the steering counting device further comprises a rotating limit structure (5) of the rotating part, the rotary part is rotated synchronously with the mounting shaft under the friction provided by the friction fit, when rotated to collide with the limit structure, the rotary part is stopped by the limit structure, the mounting shaft can continue to rotate; the first sensor is fit with the sensed component.

3. The novel walking type winding machine according to claim 2, wherein the steering counting device comprises a first part, a second part and a third part; the first part is a fixed part, mounted on the machine body, the first part includes a mounting rack (6), and the first sensor and the limit structure belong to the first part, the first sensor and the limit structure are mounted on the mounting rack; the mounting shaft is divided into an upper part (72) and a lower part (71); the lower part of the mounting shaft belong to the second part, vertically fixed on the steering part frame; the upper part of the mounting shaft belongs to the third part, and third part is mounted on the second part through the fixed connection between the upper part of the mounting shaft and the lower part of the mounting shaft, the rotary part belongs to the third part, connected to the upper part of the mounting shaft by means of the friction fit.

4. The novel walking type winding machine according to claim 2, wherein the extension line of a mounting shaft in the steering part is vertically intersected with an axle of the steering part, the lower front side of the chassis (20) of the machine body is in a step shape, and the front part of the machine body is overlaid at the rear part of the steering part through the step.

5. The novel walking type winding machine according to claim 3, wherein the extension line of a mounting shaft in the steering part is vertically intersected with an axle (11) of the steering part, the lower front side of the chassis of the machine body is in a step shape, and the front part of the machine body is overlaid at the rear part of the steering part through the step.

6. The novel walking type winding machine according to claim 2, wherein the first sensor and the limit structure have a position fit: when the rotary part collide with a limit structure (5) in front of its rotation path, the sensed component can be sensed by the sensor.

7. The novel walking type winding machine according to claim 1, wherein the second sensor is located at the rear of the steering part; the rear of the steering part has two symmetrical sensor mounting rack mounting areas (16) with respective to the midline of the steering part, and the sensor mounting racks are mounted in the sensor mounting rack mounting areas, and the second sensor is mounted symmetrically on the two mounting racks (14) with respective to the midline of the steering part.

8. The novel walking type winding machine according to claim 6, wherein the steering part is provided with a limit structure and the limit structure is used to prevent the mounting rack (14) from falling down and prevent excessive posterior displacement of the mounting rack.

9. The novel walking type winding machine according to claim 1, wherein the drive wheel (100) is driven by a DC brake motor (101), the DC brake motor is controlled by the controller and the brake mechanism of the DC brake motor is connected with a manual brake operating mechanism.

10. The novel walking type winding machine according to claim 9, wherein the manual brake operating mechanism comprises a brake lever (102) and the brake lever is connected to a brake member of the brake mechanism via a connecting mechanism, to manually operate the brake member for braking and releasing brake.

## Patentansprüche

1. Neuartige Gehwickelmaschine, die einen Lenkteil (1) und einen Maschinenkörper (2) umfasst, wobei sich der Lenkteil vor dem Maschinenkörper befindet, die Gehwickelmaschine mit einem vorderen Schutzring (12) versehen ist und der Maschinenkörper mit einem Antriebsrad (100) versehen ist,
wobei der vordere Schutzring an einem Rahmen eines Lenkteils befestigt ist; die Gehwickelmaschine mit einer Lenkzählvorrichtung versehen ist und die Lenkzählvorrichtung mit einem ersten Sensor (3) zum Erfassen der Lenkung eines Maschinenkörpers versehen ist und der erste Sensor mit einer Steuerung der Gehwickelmaschine derart verbunden ist, dass die Steuerung die Lenkzeiten ermitteln kann;
**dadurch gekennzeichnet, dass** die Wickelmaschine ferner einen zweiten Sensor (13) umfasst, der im Lenkteil angeordnet ist, der zweite Sensor oder eine fest damit verbundene Komponente von einer elastischen Komponente derart gehalten wird, dass der zweite Sensor beweglich an dem Lenkteil angebaut ist, und der zweite Sensor zum Erfassen der Rückwärtsbewegung des Rahmens des Lenkteils oder der fest mit dem Rahmen verbundenen Komponente bezogen auf den zweiten Sensor verwendet wird.

2. Neuartige Gehwickelmaschine nach Anspruch 1, wobei die Lenkzählvorrichtung eine Montagewelle in dem Lenkteil umfasst, die sich synchron mit dem Lenkteilrahmen dreht, ein Drehteil (40) an der Montagewelle montiert ist und der Drehteil eine erfasste Komponente (4) aufweist, die mit der Montagewelle über einen Reibschluss verbunden ist, die Lenkzählvorrichtung ferner eine Drehungsbegrenzungsstruktur (5) des sich drehenden Teils umfasst, der Drehteil synchron mit der Montagewelle unter der von dem Reibschluss bereitgestellten Reibung gedreht wird, wenn er so gedreht wird, dass er mit der Begrenzungsstruktur zusammenstößt, wird der Drehteil von der Begrenzungsstruktur angehalten, die Montagewelle kann sich weiterdrehen; der erste Sensor an die erfasste Komponente angepasst ist.

3. Neuartige Gehwickelmaschine nach Anspruch 2, wobei die Lenkzählvorrichtung einen ersten Teil, einen zweiten Teil und einen dritten Teil umfasst; der erste Teil ein am Maschinenkörper montierter fester Teil ist, der erste Teil eine Befestigungshalterung (6) aufweist und der erste Sensor und die Begrenzungsstruktur zum ersten Teil gehören, der erste Sensor und die Begrenzungsstruktur an der Befestigungshalterung montiert sind; die Montagewelle in einen oberen Teil (72) und einen unteren Teil (71) unterteilt ist; der untere Teil der Montagewelle zum zweiten Teil gehört, der senkrecht am Lenkteilrahmen befestigt ist; der obere Teil der Montagewelle zum dritten Teil gehört, der senkrecht am Lenkteilrahmen befestigt ist; der obere Teil der Montagewelle zum dritten Teil gehört, und der dritte Teil am zweiten Teil über die feste Verbindung zwischen dem oberen Teil der Montagewelle und dem unteren Teil der Montagewelle montiert ist, der Drehteil zum dritten Teil gehört, der mit dem oberen Teil der Montagewelle über den Reibschluss verbunden ist.

4. Neuartige Gehwickelmaschine nach Anspruch 2, wobei sich die Verlängerungslinie einer Montagewelle im Lenkteil senkrecht mit einer Achse des Lenkteils schneidet, die untere Vorderseite des Gehäuses (20) des Maschinenkörpers stufenförmig ist und der vordere Teil des Maschinenkörpers über die Stufe am hinteren Teil des Lenkteils aufgelegt ist.

5. Neuartige Gehwickelmaschine nach Anspruch 3, wobei sich die Verlängerungslinie einer Montagewelle im Lenkteil senkrecht mit einer Achse (11) des Lenkteils schneidet, die untere Vorderseite des Gehäuses des Maschinenkörpers stufenförmig ist und der vordere Teil des Maschinenkörpers über die Stufe am hinteren Teil des Lenkteils aufgelegt ist.

6. Neuartige Gehwickelmaschine nach Anspruch 2, wobei der erste Sensor und die Begrenzungsstruktur eine Positionsübereinstimmung aufweisen: Wenn der Drehteil vor seiner Rotationsbahn mit einer Begrenzungsstruktur (5) zusammenstößt, kann die erfasste Komponente von dem Sensor erfasst werden.

7. Neuartige Gehwickelmaschine nach Anspruch 1, wobei sich der zweite Sensor im hinteren Bereich des Lenkteils befindet; der hintere Bereich des Lenkteils bezogen auf die Mittellinie des Lenkteils zwei symmetrische Sensorbefestigungshalterung-Montagebereiche (16) aufweist und die Sensorbefestigungshalterungen in den Sensorbefestigungshalterung-Montagebereichen montiert sind, und der zweite Sensor bezogen auf die Mittellinie des Lenkteils symmetrisch an den beiden Befestigungshalterungen (14) montiert ist.

8. Neuartige Gehwickelmaschine nach Anspruch 6, wobei der Lenkteil mit einer Begrenzungsstruktur versehen ist und die Begrenzungsstruktur dafür verwendet wird, zu verhindern, dass die Montagehalterung (14) herunterfällt und eine zu starke Verschiebung der Montagehalterung nach hinten zu verhindern.

9. Neuartige Gehwickelmaschine nach Anspruch 1, wobei das Antriebsrad (100) von einem Gleichstrom-Bremsmotor (101) angetrieben wird, der Gleichstrom-Bremsmotor von der Steuerung gesteuert wird und der Bremsmechanismus des Gleichstrom-Bremsmotors mit einem manuellen Bremsbetätigungsmechanismus verbunden ist.

10. Neuartige Gehwickelmaschine nach Anspruch 9, wobei der manuelle Bremsbetätigungsmechanismus einen Bremshebel (102) umfasst und der Bremshebel mit einem Bremsglied des Bremsmechanismus über einen Verbindungsmechanismus verbunden ist, damit das Bremsglied zum Bremsen und Lösen der Bremse manuell betätigt wird.

## Revendications

1. Nouvelle machine à enrouler de type auto-tracté, comprenant un élément de pilotage (1) et un corps de machine (2), l'élément de pilotage étant situé à l'avant du corps de machine, la machine à enrouler de type auto-tracté étant pourvue d'un anneau de protection avant (12) et le corps de machine étant pourvu d'une roue d'entraînement (100),
l'anneau de protection avant étant fixé sur le cadre d'un élément de pilotage ; la machine à enrouler de type auto-tracté étant pourvue d'un dispositif de comptage de pilotage, et le dispositif de comptage de pilotage étant pourvu d'un premier capteur (3) pour détecter le pilotage d'un corps de machine, et le premier capteur étant connecté à une commande de la machine à enrouler de type auto-tracté de manière à ce que la commande puisse déterminer les heures de pilotage ;
**caractérisée en ce que** la machine à enrouler comprend en outre un second capteur (13) prévu dans l'élément de pilotage, le second capteur ou un composant connecté fixement à celui-ci est supporté par un composant élastique tel que le second capteur soit installé de manière mobile sur l'élément de pilotage, et que le second capteur soit utilisé pour détecter le mouvement vers l'arrière du cadre de l'élément de pilotage ou du composant connecté fixement au cadre par rapport au second capteur.

2. Nouvelle machine à enrouler de type auto-tracté selon la revendication 1, dans laquelle le dispositif de comptage de pilotage comprend dans l'élément de pilotage un arbre de montage tournant de manière synchronisée avec le cadre d'élément de pilotage, un élément rotatif (40) est monté sur l'arbre de montage, et l'élément rotatif comporte un composant détecté (4) connecté à l'arbre de montage au moyen d'un ajustement à friction, le dispositif de comptage de pilotage comprend en outre une structure de limitation de rotation (5) de l'élément rotatif, l'élément rotatif tourne de manière synchronisée avec l'arbre de montage sous la friction établie par l'ajustement à friction et, lorsqu'il tourne au point d'entrer en collision avec la structure de limitation, l'élément rotatif est stoppé par la structure de limitation, l'arbre de montage continue à tourner ; le premier capteur est adapté au composant détecté.

3. Nouvelle machine à enrouler de type auto-tracté selon la revendication 2, dans laquelle le dispositif de comptage de pilotage comprend un premier élément, un deuxième élément et un troisième élément ; le premier élément est un élément fixe monté sur le corps de machine, le premier élément comprend un rack de montage (6), et le premier capteur et la structure de limitation font partie du premier élément, le premier capteur et la structure de limitation sont montés sur le rack de montage ; l'arbre de montage est divisé en un élément supérieur (72) et un élément inférieur (71) ; la partie inférieure de l'arbre de montage fait partie du deuxième élément fixé verticalement sur le cadre d'élément de pilotage ; la partie supérieure de l'arbre de montage fait partie du troisième élément, et le troisième élément est monté sur le deuxième élément par l'intermédiaire de la connexion fixe entre la partie supérieure de l'arbre de montage et la partie inférieure de l'arbre de montage, l'élément rotatif fait partie du troisième élément connecté à la partie supérieure de l'arbre de montage au moyen de l'ajustement à friction.

4. Nouvelle machine à enrouler de type auto-tracté selon la revendication 2, dans laquelle la ligne d'extension d'un arbre de montage dans l'élément de pilotage coupe verticalement un essieu de l'élément de pilotage, la face avant inférieure du châssis (20) du corps de machines a une forme de marche, et la partie avant du corps de machine est recouverte par la marche au niveau de la partie arrière de l'élément de pilotage.

5. Nouvelle machine à enrouler de type auto-tracté selon la revendication 3, dans laquelle la ligne d'extension d'un arbre de montage dans l'élément de pilotage coupe verticalement un essieu (11) de l'élément de pilotage, la face avant inférieure du châssis du corps de machine a une forme de marche, et la partie avant du corps de machine est recouverte par la marche au niveau de la partie arrière de l'élément de pilotage.

6. Nouvelle machine à enrouler de type auto-tracté selon la revendication 2, dans laquelle le premier capteur et la structure de limitation disposent d'un ajustement de position : lorsque l'élément rotatif vient en collision avec une structure de limitation (5) en face de son parcours de rotation, le composant détecté peut être détecté par le capteur.

7. Nouvelle machine à enrouler de type auto-tracté selon la revendication 1, dans laquelle le second capteur se trouve à l'arrière de l'élément de pilotage ; l'arrière de l'élément de pilotage comporte deux zones symétriques de montage de racks de montage de capteurs (16) par rapport à la ligne centrale de l'élément de pilotage, et les racks de montage de capteurs sont montés dans les zones de montage de racks de montage de capteurs, et le second capteur est monté symétriquement sur les deux racks de montage (14) par rapport à la ligne centrale de l'élément de pilotage.

8. Nouvelle machine à enrouler de type auto-tracté selon la revendication 6, dans laquelle l'élément de pilotage est pourvu d'une structure de limitation et la structure de limitation est utilisée pour empêcher le rack de montage (14) de tomber et empêcher un déplacement postérieur excessif du rack de montage.

9. Nouvelle machine à enrouler de type auto-tracté selon la revendication 1, dans laquelle la roue d'entraînement (100) est entraînée par un moteur à frein DC (101), le moteur à frein DC est commandé par la commande et le mécanisme de freinage du moteur à frein DC est connecté à un mécanisme d'actionnement de frein manuel.

10. Nouvelle machine à enrouler de type auto-tracté selon la revendication 9, dans laquelle le mécanisme d'actionnement de frein manuel comprend un levier de frein (102) et le levier de frein est connecté à un élément de freinage du mécanisme de freinage via un mécanisme de connexion afin d'actionner manuellement l'élément de freinage pour freiner et relâcher le frein.
